# EUROPEAN PATENT APPLICATION

(11) **EP 1 035 628 A1**
(43) Date of publication of application: **13.09.2000**
(21) Application number: 00301536.9
(22) Date of filing: 28.02.2000
(51) Int. Cl.: H02J 9/06, H05B 37/03, G08B 29/12

(54) **Improvements relating to emergency lighting units and installations**

(30) Priority: 27.02.1999 GB 9904518
(71) Applicant: Emergi-lite safety Systems Ltd, Morley, Leeds LS27 9LL (GB)
(72) Inventor: Young, Neil Martin, Harrogate, North Yorkshire HG2 8NT (GB); Bowker, Steven Mark, Golcar, Huddersfield HD7 4ET (GB)
(74) Representative: Denmark, James Christopher

(57) **Abstract**

An emergency lighting unit with a receiver for receiving signals transmitted through space is disclosed. The unit has a light and a battery with charging circuitry for powering the light in the event of a mains failure. Control circuitry is provided which is capable of being switched between at least a first condition wherein the light is powered from a mains electricity supply, and a second condition wherein the light is powered by the internal battery. The lighting unit is also provided with a transmitter, a memory bank and monitoring circuitry such that when the lighting unit is caused to enter a test mode in which it is powered by the battery, various operating characteristics such as battery voltage, light output intensity, estimated remaining battery charge and time to depletion can be measured, and either stored in the memory bank or immediately transmitted to a hand-held transmitter/receiver device which can display the relevant information to a user. Alternatively, the user may arrive in the vicinity of the lighting unit well after the test mode has finished, and simply request the unit to transmit all the operating information stored in its memory bank. The transmission of information from the lighting unit is effected through space.

## Description

This invention relates to emergency lighting units and installations.

Emergency lighting installation is required by law in any building wherein, at times, there are members of the public. Such buildings include offices, shops, hospitals, hotels, cinemas and the like. Emergency lighting is a means whereby an area or position within the building will be illuminated in the event of an emergency occurring, particularly in the event of a mains power supply failure. The emergency lighting may be arranged to indicate a position such as an exit or a route to an exit, to illuminate a piece of apparatus such as a fire hose or the like, or it may be located in an area, for example in a factory or place of work, where absence of lighting could be dangerous to life, even when the lighting may be lost for only a short period.

Emergency lighting is of three types, "non-maintained", "maintained" and "sustained". In the "non-maintained" type, the light source is only illuminated in the event of a mains power failure. In the "maintained" type, a light source is normally illuminated from the mains supply, and in the event of failure of the supply, the same light source is illuminated from an emergency or standby supply. In the "sustained" type there are separate light sources, one of which is supplied from the mains supply, and the other of which is supplied by standby power and only illuminated by the standby power when the mains power supply fails. In all cases, when there is a mains failure, the emergency lighting is connected to a separate power source.

Maintenance and proper functioning of emergency lighting is an increasingly important consideration, and it is a requirement of British and European Standards that all emergency lighting units should be operated in a simulated emergency condition. In the British Standard there is a requirement to test a simulated supply failure daily for one hour, monthly every six months and for three hours every three years, where the unit is of such a type that it should operate for a predetermined duration in the event of mains supply failure.

British Patents No.1567506 and No.2059196 set forth emergency lighting units wherein an operator can transmit a signal through space to a lighting unit which in reception of the signal enters a mains failure simulation mode. This enables the operator to test the function of the lighting unit easily and efficiently without being required to climb up ladders to the unit to inspect it and without actually switching off the mains power, which can be impractical. According to the above specifications, an emergency lighting unit is provided with a receiver activated by signals transmitted through space from a generally hand-held transmitter. The receiver is connected to a control circuit of the emergency lighting unit so that upon receipt of the transmitted signals and the resultant operation of the control circuit, the effect of a mains failure is simulated. The control circuit of the lighting unit switches the power supply of the light therein to a battery also provided within the lighting unit which accordingly discharges through the light by illuminating same.

Both of the lighting units described in the above Patents disclose a switching device in the control circuit which is switchable to a test mode (in which the effect of a mains failure is simulated) on receipt of a signal transmitted through space. British Patent No.1567506 discloses a lighting unit having a switching device which is switched to test mode only for as long as signals emanating from the transmitter are received. British Patent No.2059196 discloses a lighting unit having a switching device which is adapted to remain in the test mode after transmitted signals are no longer received or transmitted and which returns the lighting unit to conventional mains powered operation when such signals are again received.

Such emergency lighting units have been very popular on account of their simple operation and testing facilities. However, the functionality of emergency lighting units is necessarily limited by such simple operation. More particularly, in existing emergency lighting installations, it has been found that the testing of each individual emergency light (known in the art as luminaires) in the system is a time consuming and laborious operation, especially where there are a large number of luminaires in the system.

With the advent of computer microprocessor technology, it has been possible to install emergency lighting systems whereby each luminaire in the system is individually addressable by the computer or from a control panel, which can accordingly cause each of the said luminaires to enter a test mode for a predetermined period of time by simply transmitting a signal to the particular luminaire to be tested. Furthermore, the computer can monitor various operating parameters of each and every luminaire within the system before, during and after the test. Such functionality can however only be achieved by hard-wiring each of the luminaires to a central control unit controlled by a computer, or to the computer itself. In many cases, the increased functionality achievable with such systems far outweighs their cost, notwithstanding that emergency lighting systems although required by law in public buildings are often a begrudged purchase of a building contractor.

Additionally, in many buildings, particularly heritage and antiquated or listed buildings, "hard wired", computer controlled emergency lighting installations of the type described above have been precluded on account of the significant installation work required to wire all the luminaires together. In such buildings, conventional mains powered emergency lighting installations may have already been installed, such as those described in the abovementioned UK Patents, and it is these simple systems which this invention aims to enhance.

It is an object of the invention to provide an emergency light fitting with increased functionality.

It is a further object of the invention to provide a means of enhancing the functionality of existing emergency lighting systems without any requirement for structural alteration to the building in which the existing system is installed.

According to the present invention there is provided an emergency lighting unit with a receiver for receiving signals transmitted through space, a light, a battery with charging circuitry for powering the light in the event of a mains failure, and a control circuit which is selectively switchable between at least a first condition wherein the light is powered from the mains, and a second condition wherein the light is powered from the battery, characterised in that the lighting unit is provided with a transmitter which is capable of transmitting information concerning at least one operating characteristic of the lighting unit through space away from the lighting unit.

Preferably the control circuitry of the lighting unit includes monitoring means which monitor at least one operating characteristic of the lighting unit, said monitoring means communicating with the transmitter which transmits information concerning all those monitored operating characteristics outwardly of the unit.

Preferably the lighting unit is provided with a plurality of monitoring means for monitoring a plurality of operating characteristics.

Preferably the control circuitry of the lighting unit also includes memory means capable of storing the information concerning the monitored operating characteristics for transmission at a later time.

Preferably the transmission of information concerning the operating characteristic of the lighting unit is effected either when the receiver of the lighting unit receives an information request signal, or when the battery of the lighting unit is caused by a user or otherwise to discharge through the light.

Preferably the transmission of information concerning the said operating characteristic is effected during a mains failure simulation mode of the lighting unit which is effected by a user having a hand held transmitter/receiver device transmitting a start signal to the lighting unit which is received thereby and causes the control circuit to switch form mains power to battery power.

Preferably, the lighting unit includes timing means, said timing means capable of being programmed to automate testing of the emergency lighting unit and/or initiate automatic transmission of the said information to the hand-held transmitter/receiver.

Preferably, the hand-held transmitter receiver communicates with a further device having memory and/or display and/or other output means. Such devices could include printers, personal computers, palm-top computers, radio controllable handsets and the like.

Preferably, the transmission of information through space is effected using radio frequency radiation, visible light or infra red radiation.

Preferably, the monitoring means monitors the battery, the light, battery voltage supply or any other operating characteristic of the lighting unit which may be considered important in analysing whether the said unit is functioning correctly.

An embodiment of the present invention will now be described, by way of example, with reference to the accompanying drawings wherein:-
Figure 1 is a diagram of components provided in a handset according to an embodiment of the present invention;
Figure 2 is a diagram of components provided in an emergency lighting unit according to an embodiment of the present invention.

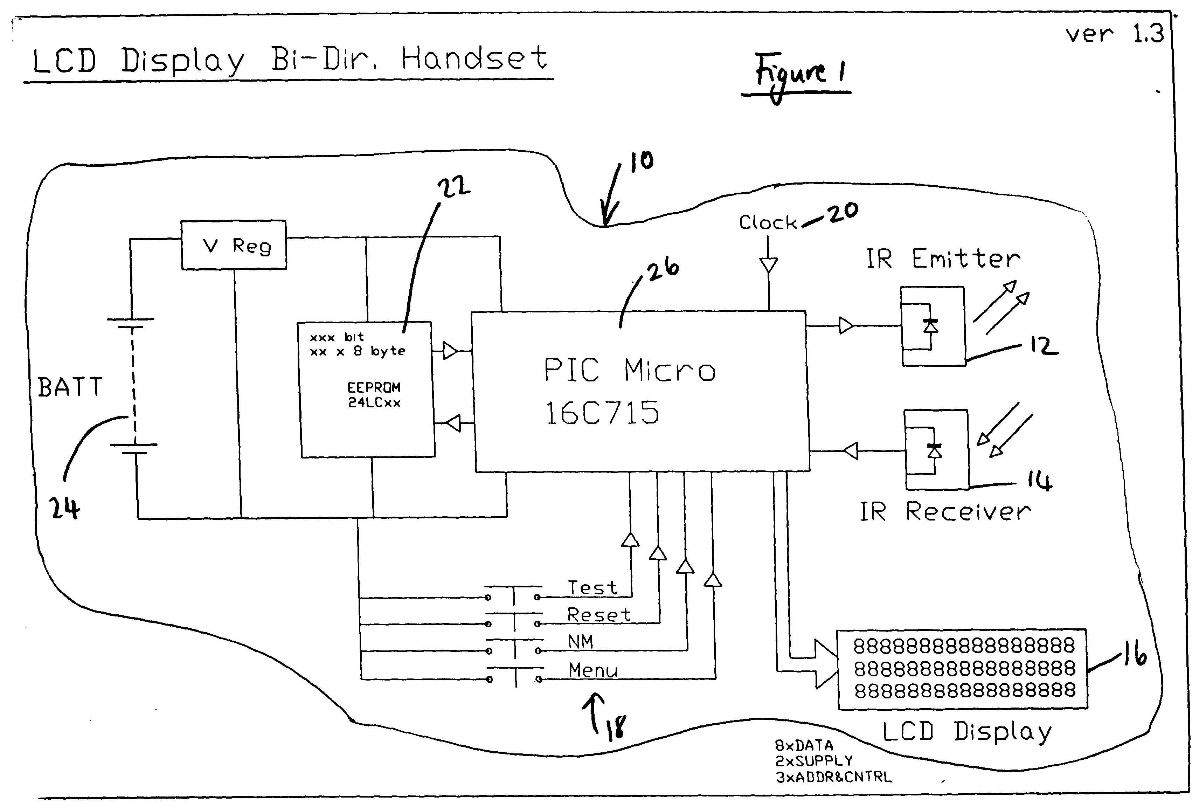

Referring to Figure 1, there are illustrated components provided in a handset indicated generally at 10. The handset 10 comprises an infra red (IR) transmitter 12 and an infra red (IR) receiver 14, a liquid crystal display (LCD) 16, function buttons 18, a timing means 20, an Electrically Erasable Programmable Read-Only-Memory (EEPROM) unit 22, and a battery 24 all of which are connected to a microprocessor controller 26.

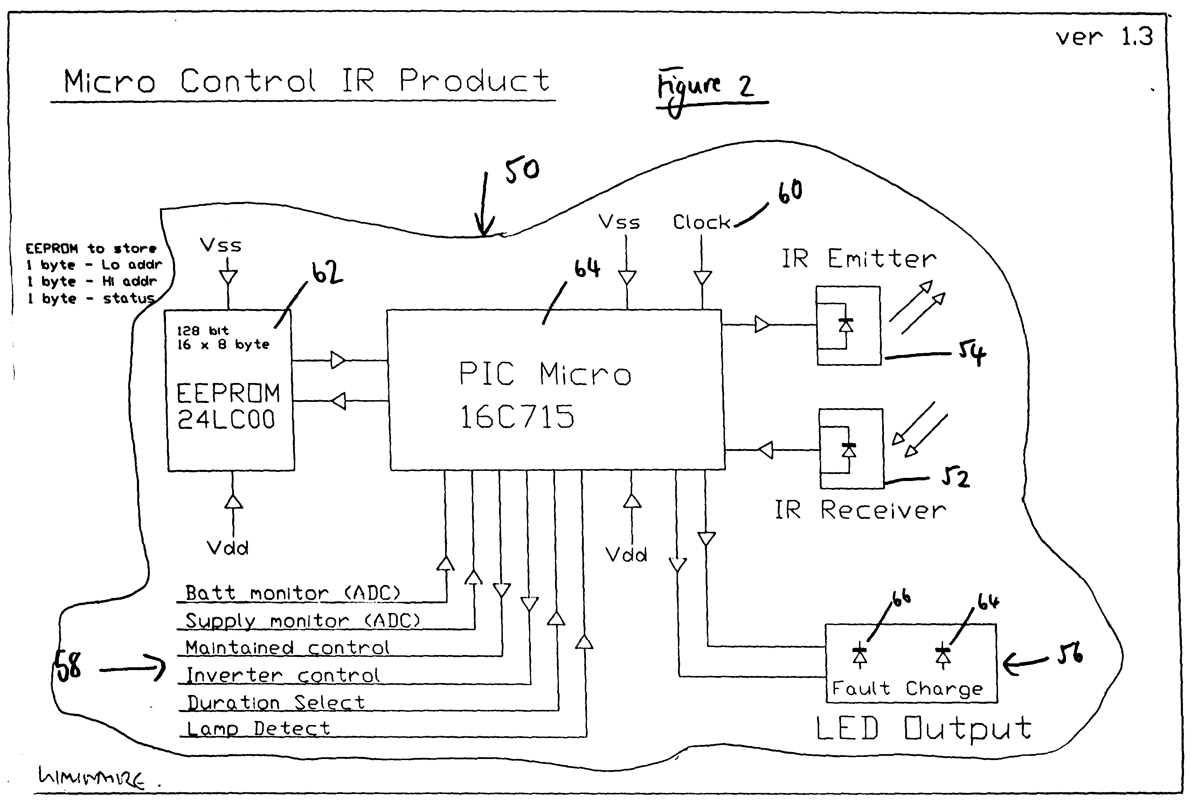

Referring to Figure 2, there are illustrated components provided in an emergency lighting unit indicated generally at 50. The lighting unit 50 comprises among other components an IR receiver 52, an IR transmitter 54, a light emitting diode (LED) output 56, various input and output operating characteristics indicated generally at 58, a timing means 60 and a EEPROM unit 62 all of which are connected to a microprocessor controller 64.

The handset 10 is provided to initiate a testing program of the emergency lighting unit 50 and to receive the test results and general status results and pertinent operating characteristics from the said lighting unit. Thus, the present invention describes herein, means by which the lighting unit 50 and the handset 10 can communicate bi-directionally with each other.

In a simplest form of the invention, on manual activation by an operator, the IR transmitter 12 located on handset 10 sends signals through space in the form of IR radiation (not shown) which is received by IR receiver 52 on lighting unit 50. Activation of IR receiver 52 on receiving the IR signal initiates testing of the lighting unit as described in British Patent No. 2059196. Upon completion of testing or at some other time, such as for example when the unit receives a specific command from the handset, the IR transmitter 54 on lighting unit 50 sends signals through space in the form of IR radiation which is received by IR receiver 14. The signals carry information concerning the various operating characteristics of the lighting unit which are being monitored or which may be set and altered by the user from the handset 10.

The handset 10 and lighting unit 50 are provided with timing means 20 and 60 respectively in the form of a processor clock or oscillator, which can be programmed to automate testing of said lighting unit and transmission by the lighting unit and receipt by the handset of test results and operating characteristic information. The timing means 20 and 60 can be programmed to automate a test or other function (described below) at a particular time and date throughout the year and for a particular duration of time. For example, testing could include an hour or three hour duration test or simply an on/off test to obtain instantaneous information concerning the operating characteristics of the lighting unit. Alternatively, the timing means 20 on handset 10 may initiate the sending of a message to the user via the display means 16 to inform said operator that testing of a particular lighting unit is due.

The handset 10 is provided with a LCD 16 to display text information to allow programming of the timing means and the handset itself, to display the information concerning the operating characteristics of the lighting unit 50 transmitted therefrom, to program, set or alter those operating characteristics of the lighting unit 50 which may be programmed set or altered, and to display information associated with each of the function buttons 18.

The function buttons 18 include at least a TEST switch for initiation of testing of the lighting unit and a RESET switch for resetting the lighting unit after testing. Other function buttons could provide programming means to set automated testing, offer a choice of the length of the test and/or recall a certain number of test results for display. It is noted that the handset 10 can be adapted to provide any number of functions and function buttons, dependent on the complexity of the unit, requirements of the operator, cost and the size of the microprocessor controller and EEPROM used.

The handset 10 is powered by battery 24, whereas a plurality of batteries in different configurations may be provided in the unit 50.

The handset 10 and the lighting unit 50 are provided with EEPROM units 25 and 62 respectively, to enable storage of programming and test results and to prevent loss of information contained therein during a total power failure. ROM 25 and 62 prevent one test from overriding or cancelling the results of a previous test. The RESET function on the handset 10 is provided as the only means by which resetting of the lighting unit can result.

Communication between the handset and the lighting unit is based on binary notation of 1 and 0 i.e., bit units, and eight binary digits i.e., byte units, which the microprocessor controller 26 in handset 10 and microprocessor controller 64 in lighting unit 50 can process. For example, one or several combinations of bits inform the microprocessor controllers of initiation of receipt or transmission of data signals. After initiation, the microprocessor controllers receive bytes of data such as 1 for an action command or 3 bytes for status data. The microprocessor controllers 26 and 64 convert bit and byte units into IR pulse signals for transmission and reception via the IR devices.

Various operating characteristics 58 in lighting unit 50 are connected by circuitry to microprocessor controller 64 which either receives information concerning particular operating characteristics of the lighting unit for subsequent transmission to the handset 10 or transmits signals previously received from the handset 10 to additional control circuitry (not shown) which controls the particular type of operation of the lighting unit, e.g. switching between conventional "maintained" control in which the lamp is mains powered and a mains failure simulation mode in which the battery of the lighting unit discharges through the lamp. The operating characteristics 58 could include information concerning the battery, thereby providing a user of the handset an indication of the battery capacity and time duration the battery has been fitted in the unit, the mains supply and lamp status.

The LED output 56 of lighting unit 50 provides a visual means by which an operator can assess the test status of the luminaire and possible failure. The LED output 56 comprises a green LED indicator 64 and a red LED indicator 66. The green LED indicator 64 is lit continuously when the emergency lighting unit is functioning and flashes to indicate when the unit has not been reset after a test. The red LED indicator 64 is lit continuously to indicate that mains power is present and the batteries are charging. Both LED indicators are extinguished during mains failure. However, it is noted that more than two LEDs could be used and could be of any colour or the green LED could be swapped with the red LED and vice versa.

Although the present invention described above refers almost exclusively to non-maintained and maintained systems with bi-directional communication, it will be understood by someone skilled in the art that the said invention could be adapted for use on a sustained lighting system and may be adapted to include any number of different features, some of which are described hereinafter.

Although it is preferable that the IR transmitter 12 and IR receiver 14 are provided in a handset 10, said transmitter and receiver could be provided as two separate units in separate housings. For example, first IR transmitter 12 could be in the form of a simple car key fob with two buttons to initiate TEST and RESET and second IR receiver 14 could be provided in a larger unit with LCD 16 to collect and display the test results. Such unit could receive information from more than one emergency lighting unit and store same.

The IR receiver 14 could be located on a printer, a personal computer, a handset or a wall unit, or a similar means by which transmitted information can be processed and displayed directly for viewing by an operator. Alternatively, the second IR receiver 14 could be housed on a means which processes and stores the received information onto a disk or tape and which is then taken to a separate unit i.e., a computer, to be displayed.

It is preferable in all embodiments that each lighting unit is programmed with a serial number known to the operator. Therefore an operator, on analysing status information received from a number of units, can distinguish which lighting unit each set of results came from.

More than one EEPROM unit or micro controller may be provided in either the handset 10 or lighting unit 50 depending on the space required for the programming of the handset and lighting unit. For example, a separate micro controller may be provided for each handset function or each functional component in the lighting unit.

Signals transmitted through space between receivers and transmitters of the light unit and handset may also include radio waves, white light or ultra-sonic radiation. However, the said signals are of such a frequency as not to produce spurious activation of circuitry. The receivers and transmitters on the lighting unit and the handset are adapted accordingly to the wave frequency used. If the light receiver 14 is located on a fixed housing, then more than one receiver may be required depending on the range of the signal used and the number of lighting units transmitting signals thereto.

The IR receiver 52 and IR transmitter 54 can be located in the lighting unit or in separate housing adjacent to the framework of the lighting unit.

The present invention has advantages over the prior art in that there is the introduction of bi-directional communications between the emergency lighting unit and remote handset. The present invention has the additional functionality of initiating testing of the lighting unit automatically and/or manually. Automation of testing reduces the work load of an operator who may have many hundreds of lighting units to test and who previously would have had to test each light unit individually. In addition, automatic testing can be programmed to take place at a time of least risk to the public, i.e., testing on a Sunday of emergency lighting units in offices. The operator does not have to be present once testing of the emergency lighting unit has been initiated, to switch the test off. The operator can then return after a period of time, such as hours, days or weeks, to collect the results of the test, thereby making the testing process more convenient.

With the prior art, failure of an emergency lighting unit would still result in the operator climbing up a ladder to determine which functional part of the lighting unit had failed. However, with the present invention and operator can determine from the information provided in the test report which components have failed or which components are likely to fail and then initiate replacement thereof. In addition, the present invention can be fitted into existing emergency lighting unit systems, thereby reducing the damage to buildings caused by installing a brand new unit including extra cabling and also reducing the overall cost.

## Claims

1. An emergency lighting unit with a receiver for receiving signals transmitted through space, a light, a battery with charging circuitry for powering the light in the event of a mains failure, and control circuitry which is selectively switchable between at least a first condition wherein the light is powered from the mains, and a second condition wherein the light is powered from the battery, characterised in that the lighting unit is provided with a transmitter which is capable of transmitting information concerning at least one operating characteristic of the lighting unit through space away from the lighting unit.

2. An emergency lighting unit according to claim 1 characterised in that the control circuitry includes monitoring means which monitor at least one operating characteristic of the lighting unit, said monitoring means communicating with the transmitter which transmits information concerning all those monitored operating characteristics away from of the unit.

3. An emergency lighting unit according to claim 2 characterised in that the lighting unit is provided with a plurality of monitoring means for monitoring a plurality of operating characteristics.

4. An emergency lighting unit according to any preceding claim characterised in that the control circuitry of the lighting unit also includes memory means capable of storing the information concerning the monitored operating characteristics for transmission at a later time.

5. An emergency lighting unit according to any preceding claim characterised in that the transmission of information concerning the operating characteristic of the lighting unit is effected when the receiver of the lighting unit receives an information request signal.

6. An emergency lighting unit according to any of claims 1-4 characterised in that the transmission of information concerning the operating characteristic of the lighting unit is effected when the battery of the lighting unit is caused by a user or otherwise to discharge through the light.

7. An emergency lighting unit according to any preceding claim characterised in that the transmission of information concerning the said operating characteristic is effected during a mains failure simulation mode of the lighting unit which is initiated by a user having a hand held transmitter/receiver device transmitting a start signal to the lighting unit which is received thereby thus causing the control circuit to switch form mains power to battery power.

8. An emergency lighting unit according to any preceding claim characterised in that the lighting unit includes timing means capable of being programmed to automate testing of the emergency lighting unit.

9. An emergency lighting unit according to claim 8 characterised in that the timing means initiates automatic transmission of the said information to the hand-held transmitter/receiver.

10. !n emergency lighting unit according to any of claims 2-9 wherein the monitoring means monitors the battery.

11. An emergency lighting unit according to any of claims 2-9 wherein the monitoring means monitors the light.

12. An emergency lighting unit according to any of claims 2-9 wherein the monitoring means monitors the battery voltage supply.

13. A hand-held transmitter/receiver unit comprising memory and display means, said unit being capable of receiving information from a lighting unit concerning the operating characteristics of said lighting unit, and displaying said information to a user, and also being capable of transmitting a signal to a lighting unit to cause the a particular operative state of said lighting unit to change for use with the unit of any of claims 1-12.

14. A hand-held transmitter/receiver unit according to claim 13 characterised in that the unit is capable of transmitting a signal to cause the lighting unit to enter a test or battery powered mode of operation.

15. A hand-held transmitter/receiver unit according to claim 13 characterised in that the unit is capable of transmitting a signal to cause the lighting unit to transmit information to said unit concerning the operating characteristics of said unit.

16. A hand-held transmitter/receiver unit according to claim 13 characterised in that the transmission of information through space is effected using radio frequency radiation.

17. A hand-held transmitter/receiver unit according to claim 13 characterised in that the transmission of information through space is effected using visible light.

18. A hand-held transmitter/receiver unit according to claim 13 characterised in that the transmission of information through space is effected using radio infra red radiation.
